# EUROPÄISCHE PATENTSCHRIFT

(11) **EP 2 161 163 B1**
(45) Veröffentlichungstag und Bekanntmachung des Hinweises auf die Patenterteilung: **20.07.2016**
(21) Anmeldenummer: 09010206.2
(22) Anmeldetag: 07.08.2009
(51) Int. Cl.: B60R 21/013, B60R 21/0132

(54) **Kollisions- und/oder Personenschutzsystem für ein Kraftfahrzeug**
Collision and/or passenger protection system for a motor vehicle
Système de protection de personnes et/ou contre les collisions pour un véhicule automobile

(30) Priorität: 03.09.2008 DE 102008045586
(43) Veröffentlichungstag der Anmeldung: 10.03.2010
(73) Patentinhaber: Audi AG, 85045 Ingolstadt (DE)
(72) Erfinder: Botsch, Michael, Dr., 85057 Ingolstadt (DE); Weiss, Christian, 85113 Böhmfeld (DE); Keck, Frank, Dr., 85139 Wettstetten (DE)
(74) Vertreter: Thielmann, Frank

(56) Entgegenhaltungen:
- EP-A2- 1 262 375
- EP-A2- 1 717 108
- WO-A1-98/29280
- US-A1- 2004 176 893
- US-A1- 2004 199 317

## Beschreibung

Die Erfindung betrifft ein Kollisions- und/oder Personenschutzsystem für ein Kraftfahrzeug, insbesondere ein Insassenschutzsystem und/oder ein Fußgängerschutzsystem für ein Kraftfahrzeug, mit zumindest einem Kollisionssensor zum Messen einer zur Kollisionserkennung geeigneten Größe, wie z. B. einer Bewegungsgröße des Kraftfahrzeuges, wobei das Kollisions- und/oder Personenschutzsystem einen mittels eines Zündsignals steuerbaren Personenschutzaktor umfasst.

Ein derartiges Kollisions- und/oder Personenschutzsystem offenbart z. B. die EP 1 902 908 A1, wobei zumindest ein Kollisionssensor zum Messen einer zur Kollisionserkennung geeigneten Größe vorgesehen ist, wobei das Kollisions- und/oder Personenschutzsystem einen mittels eines Zündsignals steuerbaren Personenschutzaktor oder eine mittels des Zündsignals steuerbare Warnvorrichtung und ein Steuergerät zur Ermittlung des Zündsignals in Abhängigkeit eines aus der mittels des Kollisionssensors gemessenen Größe gebildeten Merkmalssignals umfasst, und wobei das Kollisions- und/oder Personenschutzsystem einen automatisch ausgewählten Merkmalsgenerator zur Bildung des Merkmalssignals in Abhängigkeit der mittels des Kollisionssensors gemessenen Größe umfasst.

Die DE 199 57 187 B4 offenbart ein Verfahren zur Crasherkennung, bei dem mindestens ein von einem Sensor einer Sensoreinheit erzeugtes Sensorsignal einer Auswerteeinrichtung zugeführt wird, bei dem die Auswerteeinrichtung aus dem ihr zugeführten Sensorsignal ein crashcharakteristisches Muster ermittelt und ein zum ermittelten Muster korreliertes Steuersignal erzeugt, welches die Aktivierung mindestens einer Sicherheitseinrichtung initiiert, wobei von der Auswerteeinrichtung aus dem mindestens einen ihr zugeführten Sensorsignal ein Wichtungssignal ermittelt wird, indem eine Aufsummierung der Amplitude des Sensorsignals und der Amplitude mindestens einer zeitlichen Ableitung des Sensorsignals durchgeführt wird, wobei aus dem derart gebildeten Wichtungssignal das crashcharakterisierende Muster abgeleitet wird, und wobei die Auswerteeinrichtung das derart generierte, crashcharakterisierende Muster mit in der Auswerteeinrichtung gespeicherten Mustern vergleicht und bei einer innerhalb vorgegebener Abweichungen liegenden Übereinstimmung des ermittelten Musters mit einem der gespeicherten Muster das Steuersignal für die Sicherungseinrichtung erzeugt.

Die DE 196 19 414 C1 offenbart ein. Verfahren zur Auslösung passiver Sicherheitsvorrichtungen in einem Fahrzeug für Fahrzeuginsassen, insbesondere Airbags, Gurtstraffer, Gurtschlossschalter und Überrollbügel, bei dem mittels elektrischer Sensoren, einer die Beschleunigungssignale dieser Sensoren auswertenden Auswerteschaltung und Auslösemitteln eine Auslösung der Sicherheitsvorrichtungen erfolgt, wenn die Beschleunigungssignale auf einen für die Fahrzeuginsassen gefährlichen Fahrzeugzustand schließen lassen. Dabei werden aus quantifizierten Sensorsignalen mittels einer Bewertungsfunktion Sensorsignalkennungswerte erzeugt, die anschließend differenziert und einer Betragsfunktion zugeführt werden. Die aufintegrierten Werte dieser Beträge werden mit einer Auslöseschwelle verglichen, so dass ggf. eine Auslösung der Sicherheitsvorrichtung erfolgen kann.

Weitere Personenschutzsysteme offenbaren z. B. die WO 2005/037609 A1, die WO 2005/035320 A2, die WO 2005/035319 A1, die WO 2005/037610 A1, die DE 10 2004 032732, die DE 10 2004 031010, die DE 10 2004 025 566 A1. die DE 10 2004 025566, die DE 10 2004 027 693 A1, die DE 10 2004 026 638 A1, die DE 102 43 514 A1, die DE 101 32 681 C1, die DE 101 17 219 A1, die DE 100 65 518 B4, die DE 100 59 426 A1, die DE 100 42 376 C1, und die DE 199 09 538 A1.

Es ist Aufgabe der Erfindung, ein verbessertes Kollisions- und/oder Personenschutzsystem für ein Kraftfahrzeug anzugeben. Dabei ist es besonders wünschenswert, eine besonders präzise Auslösung eines solchen Kollisions- und/oder Personenschutzsystems für ein Kraftfahrzeug anzugeben. Insbesondere ist es wünschenswert, dass ein Algorithmus zur Erzeugung eines Zündsignals gleichzeitig interpretierbar bzw. heuristisch nachvollziehbar ist bzw. bleibt.

Vorgenannte Aufgabe wird durch ein Kollisions- und/oder Personenschutzsystem für ein Kraftfahrzeug, insbesondere ein Insassenschutzsystem und/oder Fußgängerschutzsystem für ein Kraftfahrzeug, gelöst, wobei das Kollisions- und/oder Personenschutzsystem
- zumindest einen Kollisionssensor zum Messen einer zur Kollisionserkennung geeigneten Größe des Kraftfahrzeuges,
- einen mittels eines Zündsignals auslösbaren Personenschutzaktor und/oder eine mittels des Zündsignals auslösbare Warnvorrichtung,
- einen ersten Klassifikator zur von einem - in Abhängigkeit der mittels des Kollisionssensors gemessenen Größe gebildeten - ersten Merkmalssignal abhängigen Erzeugung des Zündsignals oder einer Unsicherheits-Mitteilung, dass keine Entscheidung getroffen wird, ob das Zündsignal erfolgen soll, und
- einen zweiten Klassifikator zur von einem - in Abhängigkeit der mittels des Kollisionssensors und/oder eines weiteren Kollisionssensors gemessenen Größe gebildeten - zweiten Merkmalssignal abhängigen Erzeugung des Zündsignals bei erfolgter Unsicherheits-Mitteilung
umfasst.

Dabei wird das Zündsignal mittels des ersten Klassifikators insbesondere dann erzeugt, wenn dieser eine Kollision oder eine drohende Kollision (mit hinreichender Sicherheit) erkennt. Die Unsicherheits-Mitteilung wird insbesondere dann erzeugt, wenn mittels des ersten Klassifikators weder eine Kollision oder eine drohende Kollision mit hinreichender Sicherheit erkannt wird noch mit ebenfalls hinreichender Sicherheit ausgeschlossen werden kann. Mittels des zweiten Klassifikators wird das Zündsignal insbesondere dann erzeugt, wenn mittels des zweiten Klassifikators eine Kollision oder eine drohende Kollision (mit hinreichender Sicherheit) erkannt wird.

Ein Kollisionssensor kann im Sinne der Erfindung ein der Fahrzeugsicherheit dienender Sensor sein. Ein Kollisionssensor kann im Sinne der Erfindung ein Crashsensor sein. Ein Kollisionssensor bzw. Crashsensor kann im Sinne der Erfindung z. B. ein Sensor für ein Insassenschutzsystem (z. B. Airbag, Gurtstraffer), ein Sensor für ein Fußgängerschutzsystem, wie z. B. Beschleunigungssensor, Drucksensor und/oder Lichtwellenleiter, oder ein Sensor für ein Precrashsystem (Radar, Kamera) sein. Ein Kollisions- und/oder Personenschutzsystem für ein Kraftfahrzeug kann im Sinne der Erfindung z. B. ein Insassenschutzsystem, ein Überrollbügel, ein Fußgängerschutzsystem, ein Fahrassistenzsystem, ein Wamsystem und/oder ein Komfortsystem sein. Ein Zündsignal kann auch als Auslösesignal bezeichnet werden.

Ein Merkmalssignal (bzw. Merkmal bzw. Merkmalsvektor) im Sinne der Erfindung ist ein Signal, das durch Umwandlung (mittels des Merkmalsgenerators) eines von dem Kollisionssensor gelieferten (Ausgangs-)Signals erzeugt wird. Eine derartige Umwandlung kann z. B. Integration (ein- oder mehrfach), Differentiation (ein- oder mehrfach), Fensterintegralbildung, Filterung, Fouriertransformation, Wavelettransformation, Maximum-/Minimumanalyse, Differenzenbildung (der Signale unterschiedlicher Kollisionssensoren), Absolutwertbildung und/oder Bestimmung der Steigung gefilterter Größen umfassen. Zur Erweiterung möglicher Merkmalsgeneratoren können auch Zufallselemente bei deren Generierung eingesetzt werden (z. B. variable Schwankung von Fensterintegralbreiten, Filterkoeffizienten, etc.).

Eine Bewegungsgröße des Kraftfahrzeuges im Sinne der Erfindung kann eine Beschleunigung, eine Geschwindigkeit oder ein Weg bzw. eine von diesen Größen abgeleitete Größe sein. Die Bewegungsgröße ist dabei vorteilhafterweise eine Beschleunigung.

Ein Zündsignal im Sinne der Erfindung kann ein binäres Signal sein, das angibt, ob ein Personenschutzaktor, wie ein Airbag und/oder ein Gurtstraffer, ausgelöst werden soll. Ein solches Zündsignal im Sinne der Erfindung kann ein in der DE 100 35 505 A1 beschriebenes "FIRE/NO-FIRE"-Signal sein. Ein Zündsignal im Sinne der Erfindung kann auch ein komplexeres Signal sein, das angibt, in welchem Ausmaß (z. B. Stufe 1 oder Stufe 2) ein Airbag gezündet werden soll. Ein solches Zündsignal im Sinne der Erfindung kann zudem ein in der DE 100 35 505 A1 beschriebener Crashschwereparameter bzw. eine Insassenbeschleunigung bzw. -belastung sein. Ein Zündsignal im Sinne der Erfindung kann ein "softes" Signal sein.

Ein Klassifikator im Sinne der Erfindung ist bzw. umfasst insbesondere ein bzw. einen GRBF-Klassifikator (GRBF = Generalisierte Radiale Basis Funktionen) oder einen anderen Klassifikator, der die Bayes-Entscheidungsregel schätzt.

In vorteilhafter Ausgestaltung der Erfindung ist mittels des zweiten Klassifikators eine zweite Unsicherheits-Mitteilung, dass keine Entscheidung getroffen wird, ob das Zündsignal erfolgen soll, ausgebbar. In weiterhin vorteilhafter Ausgestaltung der Erfindung umfasst das Kollisions- und/oder Personenschutzsystem einen dritten Klassifikator zur von einem - in Abhängigkeit der mittels des Kollisionssensors und/oder des weiteren Kollisionssensors und/oder eines dritten Kollisionssensors gemessenen Größe gebildeten - dritten Merkmalssignal abhängigen Erzeugung des Zündsignals bei erfolgter zweiter Unsicherheits-Mitteilung. In weiterhin vorteilhafter Ausgestaltung der Erfindung ist die mittels des dritten Kollisionssensors gemessene Größe eine Bewegungsgröße, insbesondere eine Beschleunigung. Vorgenannte Aufgabe wird - insbesondere in Verbindung mit vorgenannten Merkmalen - zudem durch ein Verfahren zum Betrieb eines Kollisions- und/oder Personenschutzsystems für ein Kraftfahrzeug gelöst, wobei
- mittels eines Kollisionssensors eine zur Kollisionserkennung geeignete Größe des Kraftfahrzeuges gemessen wird,
- mittels eines ersten Klassifikators ein Zündsignal oder eine Unsicherheits-Mitteilung, dass keine Entscheidung getroffen wird, ob das Zündsignal erfolgen soll, in Abhängigkeit eines - in Abhängigkeit der mittels des Kollisionssensors gemessenen Größe gebildeten - ersten Merkmalssignals erzeugt wird,
- das Zündsignal mittels eines zweiten Klassifikators in Abhängigkeit eines - in Abhängigkeit der mittels des Kollisionssensors und/oder eines weiteren Kollisionssensors gemessenen Größe gebildeten - zweiten Merkmalssignals erzeugt wird, wenn eine Unsicherheits-Mitteilung erfolgt ist und mittels des zweiten Klassifikators eine Kollision oder eine drohende Kollision erkannt wird, und
- ein Personenschutzaktor und/oder eine Warnvorrichtung ausgelöst wird, wenn ein Zündsignal erzeugt worden ist.

Dabei wird das Zündsignal mittels des ersten Klassifikators insbesondere dann erzeugt, wenn dieser eine Kollision oder eine drohende Kollision (mit hinreichender Sicherheit) erkennt. Die Unsicherheits-Mitteilung wird insbesondere dann erzeugt, wenn mittels des ersten Klassifikators weder eine Kollision oder eine drohende Kollision mit hinreichender Sicherheit erkannt wird noch mit ebenfalls hinreichender Sicherheit ausgeschlossen werden kann. Mittels des zweiten Klassifikators wird das Zündsignal insbesondere dann erzeugt, wenn mittels des zweiten Klassifikators eine Kollision oder eine drohende Kollision (mit hinreichender Sicherheit) erkannt wird.

In vorteilhafter Ausgestaltung der Erfindung bezieht sich das erste Merkmalssignal auf einen ersten Zeitpunkt und das zweite Merkmalssignal auf einen zweiten Zeitpunkt, wobei der erste Zeitpunkt vor dem zweiten Zeitpunkt liegt.

In weiterhin vorteilhafter Ausgestaltung der Erfindung wird mittels des zweiten Klassifikators eine zweite Unsicherheits-Mitteilung, dass keine Entscheidung getroffen wird, ob das Zündsignal erfolgen soll, ausgegeben, wenn mittels des zweiten Klassifikators weder eine Kollision oder eine drohende Kollision mit hinreichender Sicherheit erkannt wird noch mit ebenfalls hinreichender Sicherheit ausgeschlossen werden kann. In weiterhin vorteilhafter Ausgestaltung der Erfindung wird das Zündsignal mittels eines dritten Klassifikators in Abhängigkeit eines in Abhängigkeit der mittels des Kollisionssensors und/oder eines weiteren Kollisionssensors und/oder eines dritten Kollisionssensors gemessenen Größe gebildeten dritten Merkmalssignals erzeugt, wenn eine zweite Unsicherheits-Mitteilung erfolgt ist und mittels des dritten Klassifikators eine Kollision oder eine drohende Kollision erkannt wird. In weiterhin vorteilhafter Ausgestaltung der Erfindung bezieht sich das dritte Merkmalssignal auf einen dritten Zeitpunkt, wobei der zweite Zeitpunkt vor dem dritten Zeitpunkt liegt.

Kraftfahrzeug im Sinne der Erfindung ist insbesondere ein individuell im Straßenverkehr benutzbares Landfahrzeug. Kraftfahrzeuge im Sinne der Erfindung sind insbesondere nicht auf Landfahrzeuge mit Verbrennungsmotor beschränkt.

Weitere Vorteile und Einzelheiten ergeben sich aus der nachfolgenden Beschreibung von Ausführungsbeispielen. Dabei zeigen:
- Fig. 1: eine Draufsicht auf ein Kraftfahrzeug,
- Fig. 2: ein Ausführungsbeispiel eines Insassenschutzsystems als Ausführungsbeispiel für ein Kollisions- und/oder Personenschutzsystem,
- Fig. 3: ein Ausführungsbeispiel eines Steuerungsmoduls,
- Fig. 4: ein Ausführungsbeispiel eines Auslösemoduls,
- Fig. 5: einen Klassifikator in einer Detailansicht und
- Fig. 6: die Grundarchitektur eines GRBF-Klassifikators.

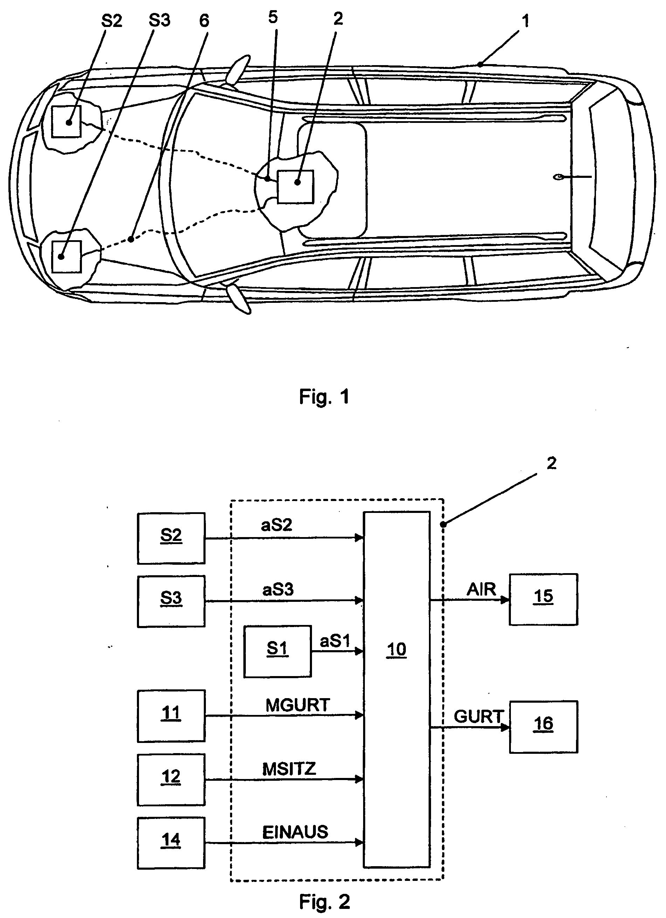

Fig. 1 zeigt eine Draufsicht auf ein Kraftfahrzeug 1 mit einem - in Fig. 2 in Form eines Blockschaltbildes dargestellten - aktiven Insassenschutzsystems als Ausführungsbeispiel für ein Kollisions- und/oder Personenschutzsystem. Das aktive Insassenschutzsystem umfasst zumindest einen - nicht in Fig. 1 jedoch in Fig. 2 dargestellten - Airbag 15 und/oder einen - nicht in Fig.1 jedoch in Fig. 2 dargestellten - Gurtstraffer 16. Das aktive Insassenschutzsystem umfasst zudem ein Steuergerät 2 zum Auslösen des Airbags 15 und/oder des Gurtstraffers 16 sowie einen in die rechte vordere Seite des Kraftfahrzeuges 1 integrierten Kollisionssensor S2 und einen in die linke vordere Seite des Kraftfahrzeuges 1 integrierten Kollisionssensor S3. Die Kollisionssensoren S2 und S3 sind mit dem Steuergerät 2 durch Zuleitungen 5 und 6 verbunden.

Die Kollisionssensoren S2 und S3 sowie ein weiterer - wie in Fig. 2 dargestellt - in das Steuergerät 2 integrierter Kollisionssensor S1 sind gemäß dem vorliegenden Ausführungsbeispiel als Beschleunigungssensoren ausgebildet. Die Kollisionssensoren S1, S2 und S3 liefern als Ausgangssignale Beschleunigungswerte aS1, aS2 bzw. aS3.

Das aktive Insassenschutzsystem umfasst zudem einen Gurtsensor 11 zum Erkennen, ob ein Sicherheitsgut angelegt ist, und zur Ausgabe einer entsprechenden Gurtinformation MGURT. Das aktive Insassenschutzsystem umfasst weiterhin einen Sitzbelegungssensor 12 zum Erkennen, ob bzw. wie ein Sitz belegt ist, und zur Ausgabe einer entsprechenden Sitzbelegungsinformation MSITZ. Es kann weiterhin vorgesehen sein, dass das aktive Insassenschutzsystem ein Bedienelement 14 zur Aktivierung bzw. Deaktivierung des Airbags 15 umfasst. Ein entsprechendes Schaltsignal ist mit Bezugszeichen EINAUS bezeichnet. Das Steuergerät 2 umfasst ein Steuerungsmodul 10 zur Berechnung und Ausgabe eines Zündsignals AIR für den Airbag 15 und/oder eines Zündsignals GURT für den Gurtstraffer 16 in Abhängigkeit der Beschleunigungswerte aS1, aS2 bzw. aS3, der Gurtinformation MGURT, der Sitzbelegungsinformation MSITZ und des Schaltsignals EINAUS.

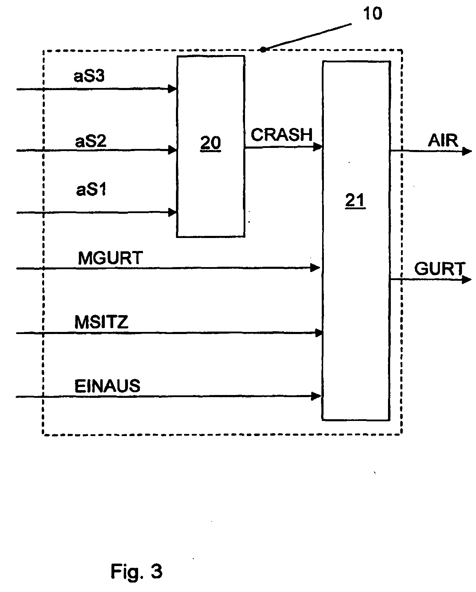

Fig. 3 zeigt das Steuerungsmodul 10 in einer beispielhaften Ausgestaltung. Das Steuerungsmodul 10 umfasst ein Auslösemodul 20 zur Berechnung und Ausgabe eines Zündvorschlags CRASH in Abhängigkeit der Beschleunigungswerte aS1, aS2 bzw. aS3. Das Steuerungsmodul 10 umfasst zudem eine Feuertabelle 21 zur Berechnung und Ausgabe des Zündsignals AIR für den Airbag 15 und/oder des Zündsignals GURT für den Gurtstraffer 16 in Abhängigkeit des Zündvorschlags CRASH, der Gurtinformation MGURT, der Sitzbelegungsinformation MSITZ und des Schaltsignals EINAUS. So kann z. B. vorgesehen werden, dass das Zündsignal AIR nur dann gleich dem Zündvorschlag CRASH ist, wenn ein entsprechender Sitz mit einer Person einer gewissen Größe belegt ist, und dass das Zündsignal AIR andernfalls gleich 0 ist.

Sowohl der Zündvorschlag CRASH als auch die Zündsignale AIR und GURT können Zündsignale im Sinne der Ansprüche sein. Sowohl der Zündvorschlag CRASH als auch die Zündsignale AIR und GURT können ein - z. B. dem in der DE 100 35 505 A1 beschriebenen "FIRE/NO-FIRE"-Signal entsprechendes - binäres Signal sein, das angibt, ob ein Insassenschutzaktor, wie ein Airbag und/oder ein Gurtstraffer, ausgelöst werden soll. Sowohl der Zündvorschlag CRASH als auch die Zündsignale AIR und GURT können auch ein komplexeres Signal sein. Sowohl der Zündvorschlag CRASH als auch das Zündsignal AIR können z. B. ein komplexeres Signal sein, das angibt, in welchem Ausmaß (z. B. Stufe 1 oder Stufe 2) der Airbag 15 gezündet werden soll. Sowohl der Zündvorschlag CRASH als auch das Zündsignal AIR können z. B. zudem einen in der DE 100 35 505 A1 beschriebenen Crashschwereparameter bzw. eine Insassenbeschleunigung bzw. -belastung umfassen.

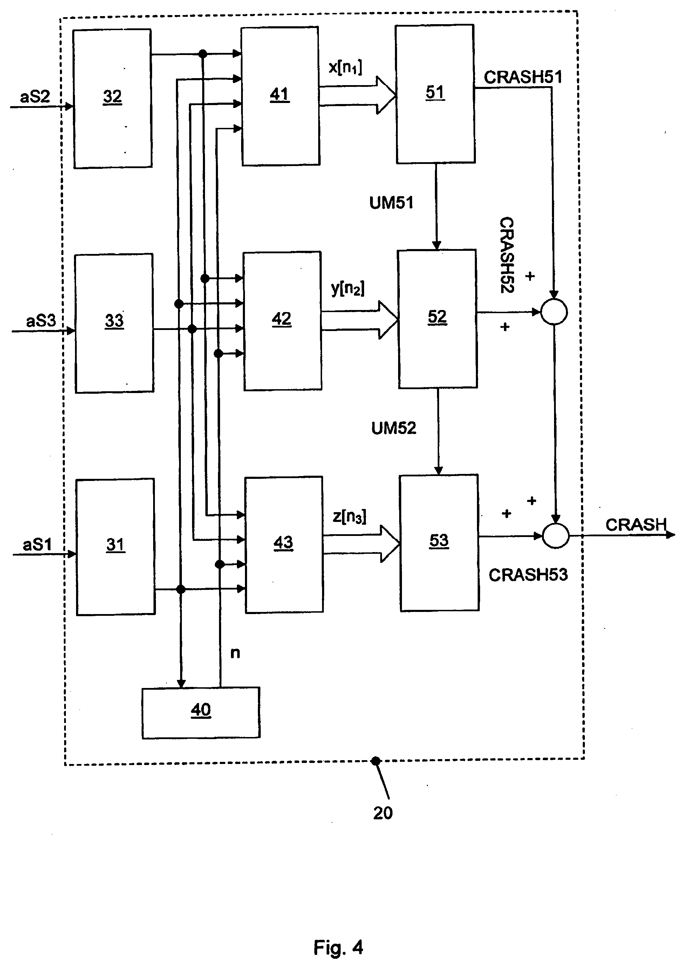

Fig. 4 zeigt das Auslösemodul 20 in detaillierterer Darstellung. Dabei bezeichnet Bezugszeichen 31 ein Modul mit einem A/D-Wandler und einem Tiefpassfilter zur Analog/DigitalWandlung und anschließenden Tiefpassfilterung des Ausgangssignals aS1 des Kollisions-sensors S1. Bezugszeichen 32 bezeichnet ein Modul mit einem A/D-Wandler und einem Tiefpassfilter zur Analog/Digital-Wandlung und anschließenden Tiefpassfilterung des Ausgangssignals aS2 des Kollisionssensors S2, und Bezugszeichen 33 bezeichnet ein Modul mit einem A/D-Wandler und einem Tiefpassfilter zur Analog/Digital-Wandlung und anschließenden Tiefpassfilterung des Ausgangssignals aS3 des Kollisionssensors S3. Bezugszeichen 40 bezeichnet ein Triggermodul. Überschreitet das tiefpassgefilterte Ausgangssignal aS1 des Kollisionssensors S1 einen bestimmten Schwellwert, so erzeugt das Trägermodul 40 ein von Null beginnendes Zeitsignal n.

Das Auslösemodul 20 umfasst zudem einen Merkmalsgenerator 41 zur Erzeugung eines Merkmalsvektors x[n₁] in Abhängigkeit des tiefpassgefilterten Ausgangssignals aS1 des Kollisionssensors S1 und/oder des tiefpassgefilterten Ausgangssignals aS2 des Kollisionssensors S2 und/oder des tiefpassgefilterten Ausgangssignals aS3 des Kollisionssensors S3 zum Zeitpunkt n = n₁, einen Merkmalsgenerator 42 zur Erzeugung eines Merkmalsvektors y[n₂] in Abhängigkeit des tiefpassgefilterten Ausgangssignals aS1 des Kollisionssensors S1 und/oder des tiefpassgefilterten Ausgangssignals aS2 des Kollisionssensors S2 und/oder des tiefpassgefilterten Ausgangssignals aS3 des Kollisionssensors S3 zum Zeitpunkt n = n₂ und einen Merkmalsgenerator 43 zur Erzeugung eines Merkmalsvektors z[n₃] in Abhängigkeit des tiefpassgefilterten Ausgangssignals aS1 des Kollisionssensors S1 und/oder des tiefpassgefilterten Ausgangssignals aS2 des Kollisionssensors S2 und/oder des tiefpassgefilterten Ausgangssignals aS3 des Kollisionssensors S3 zum Zeitpunkt n = n₃.

Das Auslösemodul 20 umfasst zudem Klassifikatoren 51, 52, 53 zur Erzeugung von Zündvorschlägen CRASH 51, CRASH 52, CRASH 53 in Abhängigkeit der Merkmalsfaktoren x[n₁], y[n₂] und z[n₃]. In dem vorliegenden Ausführungsbeispiel sind die Zündvorschläge CRASH 51, CRASH 52 und CRASH 53 über Summationspunkte verbunden, an deren Ausgang der Zündvorschlag CRASH steht. Anstelle der Summationspunkte kann zum Beispiel auch ein logisches UND-Glied mit drei Eingängen oder eine Verknüpfung von zwei logischen UND-Gliedern mit jeweils zwei Eingängen stehen.

Der Zündvorschlag CRASH 51 wird zu 1 gesetzt, wenn der Klassifikator 51 - aufgrund des von dem Merkmalsgenerator 42 ausgegebenen Merkmals x[n₁] - eine Kollision und/oder eine drohende Kollision erkennt. Erkennt der Klassifikator 51, dass keine Kollision vorliegt und/oder keine Kollision droht, so bleibt der Zündvorschlag CRASH 51 bei einem Wert 0. Das Gleiche gilt, wenn der Klassifikator 51 nicht entscheiden kann, ob eine Kollision vorliegt und/oder eine Kollision droht. In diesem Fall gibt der Klassifikator 51 jedoch eine Unsicherheits-Mitteilung UM51 aus.

Gibt der Klassifikator 51 die Unsicherheits-Mitteilung 51 und der Merkmalsgenerator 42 das Merkmal y[n₂] aus, so ermittelt der Klassifikator 52 in Abhängigkeit des Merkmalsvektors y[n₂], ob eine Kollision vorliegt bzw. droht. Erkennt der Klassifikator 52, dass eine Kollision erfolgt ist oder und/oder droht, so wird der Zündvorschlag CRASH 52 zu 1 gesetzt. Erkennt der Klassifikator 52, dass keine Kollision vorliegt und/oder keine Kollision droht, so bleibt der Zündvorschlag CRASH 52 bei einem Wert 0. Das Gleiche gilt, wenn der Klassifikator 52 nicht entscheiden kann, ob eine Kollision vorliegt und/oder eine Kollision droht. In diesem Fall gibt der Klassifikator 52 jedoch eine Unsicherheits-Mitteilung UM52 aus.

Gibt der Klassifikator 52 die Unsicherheits-Mitteilung 52 und der Merkmalsgenerator 43 das Merkmal z[n₃] aus, so ermittelt der Klassifikator 53 in Abhängigkeit des Merkmalsvektors z[n₃], ob eine Kollision vorliegt bzw. droht. Erkennt der Klassifikator 53, dass eine Kollision erfolgt ist oder und/oder droht, so wird der Zündvorschlag CRASH 53 zu 1 gesetzt. Erkennt der Klassifikator 53, dass keine Kollision vorliegt und/oder keine Kollision droht, so bleibt der Zündvorschlag CRASH 53 bei einem Wert 0.

In dem vorliegenden Ausführungsbeispiel sind drei Klassifikatoren 51, 52 und 53 vorgesehen. Es können jedoch noch mehr Klassifikatoren in dieser Kette von Klassifikatoren vorgesehen werden, wobei die zusätzlichen Klassifikatoren zwischen den beiden Klassifikatoren 51 und 53 entsprechend dem Klassifikator 52 ausgestaltet sind. Der letzte Klassifikator in der Kette - d. h. in diesem Fall der Klassifikator 53 - wird so ausgelegt, dass er - falls der Entscheidungsprozess bis zu ihm vordringt - auf jeden Fall eine Entscheidung trifft.

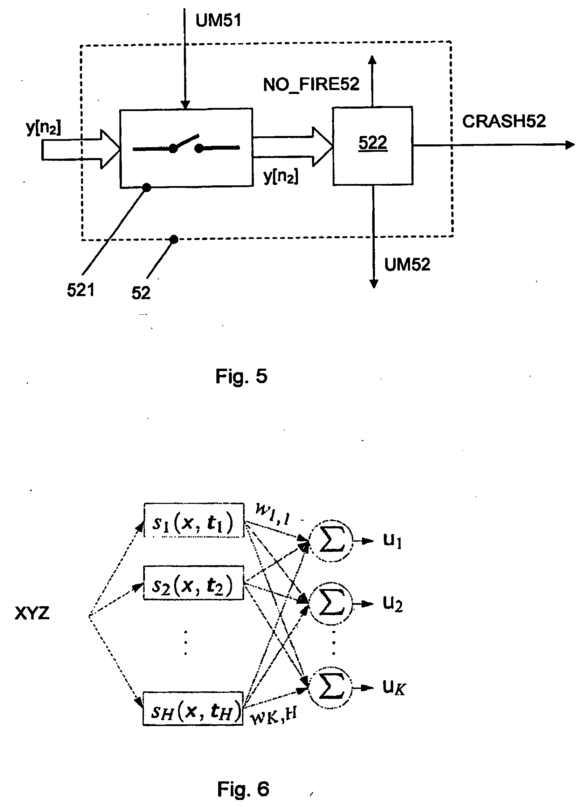

Fig. 5 zeigt eine Detaildarstellung des Klassifikators 52. Dieser umfasst einen Schaltungs-block 521 und den eigentlichen Klassifikator 522. Mittels des Schaltungsblocks 521 wird sichergestellt, dass der Klassifikator 522 nur Ausgangswerte liefert, wenn die Unsicherheits-Mitteilung 52 vorliegt. Im vorliegenden Ausführungsbeispiel ist vorgesehen, dass kein gesondertes Ausgangssignal erzeugt wird, wenn der Klassifikator 522 erkennt, dass keine Kollision vorliegt bzw. keine Kollision droht. Dies ist im vorliegenden Ausführungsbeispiel durch ein mit NO_FIRE52 bezeichnete Signal angedeutet, das nicht "herausgeführt" wird. Der Klassifikator 51 ist strukturell entsprechend dem Klassifikator 522 ausgestaltet. Der Klassifikator 53 ist strukturell dem Klassifikator 52 ähnlich ausgestaltet, das heißt, er umfasst einen Schaltungsblock und einen eigentlichen Klassifikator, wobei jedoch der eigentliche Klassifikator keine Unsicherheits-Mitteilung ausgibt.

Der Klassifikator 522 umfasst einen so genannten GRBF-Klassifikator. Einzelheiten derartiger Klassifikatoren, insbesondere in ihrer Ausgestaltung als Bayes-Klassifikatoren, können z. B. den folgenden Internetseiten entnommen werden:
- www.techfak.uni-bielefeld.de/ags/ni/lectures/lectures-WO5/Neurol/media/Neurol.pdf
- de.wikipedia.org/wiki/Bayes-Klassifikator
- cvpr.uni-muenster.de/teaching/ws06/mustererkennungWS06/script/ME05.pdf
- ftp.tnt.uni-hannover.de/pub/edu/MusterErk/uebung/Uebung05.pdf

Der GRBF-Klassifikator wird so entworfen, dass er interpretierbar ist. In Fig. 6 ist die Grundarchitektur des GRBF-Klassifikators dargestellt. Dabei wird ein Merkmalsvektor XYZ (steht für einen der Merkmalen bzw. Merkmalensvektoren x[n₁], v[n₂] oder z[n₃] aus Fig. 4) in einen Vektor von geschätzten Wahrscheinlichkeitsdichten u übergeführt. Der allgemeine Fall ist in Fig. 6 dargestellt, wobei es K mögliche Klassen (Entscheidungsmöglichkeiten mit Ausnahme von "Unsicher") gibt. Die Berechnung von u aus dem Eingang XYZ geschieht wie bei üblichen GRBF-Klassifikatoren. Es wird zunächst die Ähnlichkeit zwischen XYZ und den H Prototypen tₕ (auch Zentren genannt) bestimmt. Sowohl die Anzahl der Prototypen als auch ihre Lage und die verwendeten Ähnlichkeitsmaße werden aus dem Random Forest Algorithmus bestimmt.

Die Interpretierbarkeit des Klassifikators wird durch folgende Einschränkungen erreicht:
- Die Prototypen tₕ, h = 1, ..., H, sind eindeutig einer Klasse zugeordnet.
- Die Gewichte w_{k,h} (Verbindung von sₕ(x,tₕ) zum k-ten Ausgang) im GRBF-Klassifikator werden so gewählt, dass sie positiv sind, falls das Zentrum tₕ zur k-ten Klasse gehört und ansonsten negativ oder Null. Die Bestimmung der Gewichte beruht auf dem Lösen einer Optimierungsaufgabe mit Nebenbedingungen.

Damit ergibt sich die interpretierbarkeit durch Aussagen der folgenden Form: "Der Eingang XYZ wird der k-ten Klasse zugeordnet, weil er nah an einem oder mehreren Prototypen der k-ten Klasse liegt und weit weg von Prototypen anderer Klassen". Wenn die Prototypen tₕ interpretierbar sind, ist damit auch der GRBF-Klassifikator interpretierbar.

Die Ausgänge u sind zwar Schätzwerte von bedingten Wahrscheinlichkeiten, sie erfüllen aber die an Wahrscheinlichkeiten gestellten Anforderungen nicht (Wertebereich muss zwischen 0 und 1 liegen; die Summe über alle bedingten Wahrscheinlichkeiten muss 1 ergeben). Aus diesem Grund wird u mittels einer streng monotonen Abbildung nach cnf(u) überführt, einen Vektor der Konfidenzwerte enthält, die nun im Wertebereich zwischen 0 und 1 liegen. Damit auch die Summe über alle bedingten Wahrscheinlichkeiten 1 ergibt, erfolgt anschließend eine Normierung. Das Ergebnis ist ein Vektor mit Schätzwerten der bedingten Klassenwahrscheinlichkeiten. Der theoretisch beste Klassifikator, der Bayes-Klassifikator, entscheidet sich für die Klasse mit maximalem Wert der tatsächlichen bedingten Klassenwahrscheinlichkeit. Entsprechend entscheidet sich der GRBF-Klassifikator für die Klasse mit maximalem Wert der geschätzten bedingten Klassenwahrscheinlichkeit.

Zur Implementierung eines entsprechenden GRBF-Klassifikators wird eine Datenbasis, die auf typische Unfallszenarien widerspiegelnde Crashtests aufgebaut ist, erstellt. Dabei werden pro Crash die Sensordaten gespeichert. Die erwünschten Klassifikationsentscheidungen (z. B. Auslösen, Nicht-Auslösen) ergeben sich aus der Art des Unfalls und sind abhängig vom Fahrzeugtyp. Die Zeitpunkte, bei denen die Klassifikatoren eine Auslösung der Sicherheitssysteme einleiten sollen, werden so ausgelegt, dass für die betrachteten Unfallszenarien das Verletzungsrisiko (für die Insassen) möglichst gering ist. Für die Auslösung von Airbags wird üblicherweise das Vorverlagerungskriterium verwendet.

In einem nächsten Schritt werden anwendungsgebundene Ereignisse bestimmt, wobei die Ereignisse zeitlich hintereinander liegen. Geeignete Ereignisse für die vorliegende Aufgabe können durch Überschreiten von Schwellen definiert werden. Die tiefpassgefilterten Beschleunigungssignale aS1, aS2 und aS3 der im Kraftfahrzeug 1 verbauten Kollisionssensoren S1, S2, S3 werden hierfür verwendet. Zunächst wird ein zeitlicher Bezugspunkt festgelegt, der dann erreicht wird, wenn das tiefpassgefilterte Ausgangssignal aS1 des zuverlässigsten (im Steuergerät 2 verbauten) Kollisionssensors S1 eine Schwelle über-schreitet. Diese Schwelle wird so gelegt, dass in jedem Unfall (Crash) bei dem das Auslösen eines Rückhaltesystems gefordert wird, der Schwellwert vor dem gewünschten Auslösezeitpunkt überschritten wird. Dieser Zeitpunkt wird mit nₒ bezeichnet. Ab dem Zeitpunkt nₒ wird die akkumulierte Energie in den Beschleunigungssignalen beobachtet und die Ereignisse damit definiert. Das erste Ereignis wird durch das Überschreiten eines Schwellwerts τ₁ realisiert und der entsprechende Zeitpunkt wird mit n₁ bezeichnet. Das zweite Ereignis wird durch das Überschreiten eines Schwellwerts τ₂ zum Zeitpunkt n₂ realisiert. Die folgenden Ereignisse bzw. Zeitpunkte n₃ usw. werden entsprechend bestimmt.

Der Bestimmung der anwendungsgebundenen Ereignisse folgt ein Schritt zur Generierung von zu den Zeitpunkten n₁, n₂, n₃ korrespondierenden Merkmalen bzw. Merkmalensvektoren x[n₁], v[n₂] oder z[n₃] aus den Ausgangssignalen aS1, aS2 und aS3 der Kollisionssensoren S1, S2 und S3. Die Einträge in diesen Merkmalsvektoren (wird synonym für Merkmale verwendet) basieren auf den Ausgangssignalen aS1, aS2 und aS3 der Sensoren S1, S2 und S3 ab dem Bezugszeitpunkt nₒ bis zu den jeweiligen Zeitpunkten n₁, n₂, n₃. Typische Merkmale sind:
- Dauer zwischen dem Eintreten zweier Ereignisse
- Maximalwerte der tiefpassgefilterten Beschleunigungssignale bis nᵢ sowie der Zeitpunkt ihres Auftretens
- akkumulierte Energie bzw. mittlere Energie pro Abtastwert in den einzelnen Beschleunigungssignalen (Ausgangssignalen aS1, aS2 und aS3 der Sensoren S1, S2 und S3) zum Zeitpunkt nᵢ
- aktuelle Größe von in Phasenräumen (z. B. Geschwindigkeitsabbau vs. Ableitung der Beschleunigung) definierten Flächen zum Zeitpunkt nᵢ
- mittlere Energie in vorgegebenen Frequenzbändern zum Zeitpunkt nᵢ

Diese Merkmale werden in einem Merkmalsvektor x' [nₗ] abgelegt.

Es folgt ein Schritt zur Ermittlung der gewünschten Entscheidungen. Dabei wird für jeden Zeitpunkt nₗ entsprechend der Datenbasis, die erwünschte Entscheidung des Klassifikators ermittelt. Falls sich dabei herausstellt, dass es Beispiele in der Datenbasis gibt, für die eine rechtzeitige Auslösung nicht möglich ist, lässt sich dieses Problem durch das Einführen von zusätzlichen Ereignissen lösen. Dabei werden zusätzliche Schwellwerte iₖ benutzt.

Für jeden Zeitpunkt nᵢ wird ein Datensatz Dᵢ erstellt, der für jeden Crash aus der Datenbasis einen entsprechenden Merkmalsvektor x'[nᵢ] und die gewünschte Klassifikationsentscheidung enthält. Falls z. B. Daten aus N Crashs vorliegen wird es N Merkmalsvektoren x'[nᵢ] für den Zeitpunkt nᵢ geben.

Für jeden Zeitpunkt nᵢ wird, beruhend auf dem Datensatz Dᵢ, ein Random Forrest Klassifikator entworfen. Dieser Klassifikator wird so ausgelegt, dass er für die N Merkmalsvektoren x'[nᵢ] das gewünschte Klassifikationsergebnis erzielt.

Mit Hilfe von statistischen Methoden, die im Random Forest Algorithmus integriert sind, lassen sich in einem iterativen Verfahren die klassifikationsrelevanten Merkmale, d. h. die für eine gute Verallgemeinerungsfähigkeit wesentlichen Signalcharakteristika, ermitteln. Die nicht benötigten Einträge in x[nᵢ] werden entfernt und der Merkmalsvektor x[nᵢ] erhalten, der für den i-ten Klassifikator verwendet wird. Die Dimensionalität der zu verschiedenen Klassifikatoren zugehörigen Merkmalsvektoren (x[n₁], v[n₂], z[n₃]) kann unterschiedlich sein.

Danach werden - gemäß dem bereits beschriebenen Verfahren - für jeden Triggerzeitpunkt nᵢ aus dem entsprechenden Datensatz Dᵢ und dem entsprechenden Random Forest Klassifikator ein GRBF-Klassifikator ermittelt.

Optional kann eine Validierung erfolgen. Dazu wird mittels Verfahren, die aus der Statistik bzw. aus dem Bereich der Maschinenlernverfahren bekannt sind, ein fairer Schätzwert der Verallgemeinerungsfähigkeit des Gesamtklassifikators ermittelt. Solche Verfahren sind die Kreuzvalidierungsmethode oder die Verwendung einer unabhängigen Datenbasis an Crashs für den betrachteten Fahrzeugtyp. Dabei wird sichergestellt, dass nicht nur für Unfälle aus der Datenbasis, die zum Entwurf der Klassifikatoren hergenommen wurde, richtig entschieden wird. Durch die Analyse der Zentren, die bei dem GRBF-Entwurf entstanden sind, lässt sich jedes Grundmodul durch den Fachmann interpretieren.

### BEZUGSZEICHENLISTE

- 1: Kraftfahrzeug
- 2: Steuergerät
- 5,6: Zuleitungen
- 10: Steuerungsmodul
- 11: Gurtsensor
- 12: Sitzbelegungssensor
- 14: Bedienelement
- 15: Airbag
- 16: Gurtstraffer
- 20: Auslösemodul
- 31, 32, 33: A/D-Wandler und Tiefpassfilter
- 40: Triggermodul
- 41, 42, 43: Merkmalsgenerator
- 51, 52, 53, 522: Klassifikator
- 521: Schaltungsblock

- AIR, GURT: Zündsignal
- aS1, aS2, aS3, as1, as2, as3: Beschleunigungswert
- CRASH, CRASH51, CRASH52, CRASH53: Zündvorschlag
- CRASH_LEARN: Zündsignal
- EINAUS: Schaltsignal
- MGURT: Gurtinformation
- MSITZ: Sitzbelegungsinformation
- S1, S2, S3: Kollisionssensor
- u₁, u₂, u_{K}: Wahrscheinlichkeitsdichte
- UM51, UM52: Unsicherheits-Mitteilung
- W₁,_{1,} W_{KH}: Gewicht
- XYZ, x[n₁], y[n₂], z[n_{3]}: Merkmal bzw. Merkmalsvektor

## Patentansprüche

1. Kollisions- oder Personenschutzsystem für ein Kraftfahrzeug (1), insbesondere Insassenschutzsystem oder Fußgängerschutzsystem für ein Kraftfahrzeug, mit zumindest einem Kollisionssensor (S1) zum Messen einer zur Kollisionserkennung geeigneten Größe (aS1) des Kraftfahrzeuges (1), wobei das Kollisions- oder Personenschutzsystem einen mittels eines Zündsignals (CRASH, AIR, GURT) auslösbaren Personenschutzaktor (15, 16) oder eine mittels des Zündsignals (CRASH, AIR, GURT) auslösbare Warnvorrichtung umfasst, wobei das Kollisions- oder Personenschutzsystem einen ersten Klassifikator (51) zur von einem - in Abhängigkeit der mittels des Kollisionssensors (S1) gemessenen Größe (aS1) gebildeten - ersten Merkmalssignal (x[n₁]) abhängigen Erzeugung des Zündsignals (CRASH, AIR, GURT) oder, wenn mittels des ersten Klassifikators (51) weder eine Kollision oder eine drohende Kollision mit hinreichender Sicherheit erkannt wird noch mit ebenfalls hinreichender Sicherheit ausgeschlossen werden kann, einer Unsicherheits-Mitteilung (UM51), dass keine Entscheidung getroffen wird, ob das Zündsignal (CRASH, AIR, GURT) erfolgen soll, aufweist, und wobei das Kollisions- oder Personenschutzsystem einen zweiten Klassifikator (52) zur von einem - in Abhängigkeit der mittels des Kollisionssensors (S1) oder eines weiteren Kollisionssensors (S2) gemessenen Größe (aS1, aS2) gebildeten - zweiten Merkmalssignal (y[n₂]) abhängigen Erzeugung des Zündsignals (CRASH, AIR, GURT) bei erfolgter Unsicherheits-Mitteilung (UM51) umfasst.

2. Kollisions- oder Personenschutzsystem nach Anspruch 1, **dadurch gekennzeichnet, dass** die mittels des Kollisionssensors (S1) gemessene Größe (aS1) eine Bewegungsgröße, insbesondere eine Beschleunigung, ist.

3. Kollisions- oder Personenschutzsystem nach Anspruch 1 oder 2, **dadurch gekennzeichnet, dass** die mittels des weiteren Kollisionssensors (S2) gemessene Größe (aS2) eine Bewegungsgröße, insbesondere eine Beschleunigung, ist.

4. Kollisions- oder Personenschutzsystem nach Anspruch 1, 2 oder 3, **dadurch gekennzeichnet, dass** mittels des zweiten Klassifikators (52), wenn mittels des zweiten Klassifikators (52) weder eine Kollision oder eine drohende Kollision mit hinreichender Sicherheit erkannt wird noch mit ebenfalls hinreichender Sicherheit ausgeschlossen werden kann, eine zweite Unsicherheits-Mitteilung (UM52), dass keine Entscheidung getroffen wird, ob das Zündsignal (CRASH, AIR, GURT) erfolgen soll, ausgebbar ist.

5. Kollisions- oder Personenschutzsystem nach Anspruch 4, **dadurch gekennzeichnet, dass** es einen dritten Klassifikator (53) zur von einem - in Abhängigkeit der mittels des Kollisionssensors (S1) oder des weiteren Kollisionssensors (S2) oder eines dritten Kollisionssensors (S3) gemessenen Größe (aS1, aS2, aS3) gebildeten - dritten Merkmalssignal (z[n₃]) abhängigen Erzeugung des Zündsignals (CRASH, AIR, GURT) bei erfolgter zweiter Unsicherheits-Mitteilung (UM52) umfasst.

6. Kollisions- oder Personenschutzsystem nach Anspruch 5, **dadurch gekennzeichnet, dass** die mittels des dritten Kollisionssensors (S3) gemessene Größe (aS3) eine Bewegungsgröße, insbesondere eine Beschleunigung, ist.

7. Verfahren zum Betrieb eines Kollisions- oder Personenschutzsystems für ein Kraftfahrzeug (1), insbesondere eines Kollisions- oder Personenschutzsystems nach einem der vorhergehenden Ansprüche, wobei
- mittels eines Kollisionssensors (S1) eine zur Kollisionserkennung geeignete Größe (aS1) des Kraftfahrzeuges (1) gemessen wird,
- mittels eines ersten Klassifikators (51) ein Zündsignal (CRASH, AIR, GURT) oder, wenn mittels des ersten Klassifikators (51) weder eine Kollision oder eine drohende Kollision mit hinreichender Sicherheit erkannt wird noch mit ebenfalls hinreichender Sicherheit ausgeschlossen werden kann, eine Unsicherheits-Mitteilung (UM51), dass keine Entscheidung getroffen wird, ob das Zündsignal (CRASH, AIR, GURT) erfolgen soll, in Abhängigkeit eines - in Abhängigkeit der mittels des Kollisionssensors (S1) gemessenen Größe (aS1) gebildeten - ersten Merkmalssignals (x[n₁]) erzeugt wird,
- das Zündsignal (CRASH, AIR, GURT) mittels eines zweiten Klassifikators (52) in Abhängigkeit eines - in Abhängigkeit der mittels des Kollisionssensors (S1) oder eines weiteren Kollisionssensors (S2) gemessenen Größe (aS1, aS2) gebildeten - zweiten Merkmalssignals (y[n₂]) erzeugt wird, wenn eine Unsicherheits-Mitteilung (UM51) erfolgt ist und mittels des zweiten Klassifikators (52) eine Kollision oder eine drohende Kollision erkannt wird, und
- ein Personenschutzaktor (15, 16) und/oder eine Warnvorrichtung ausgelöst wird, wenn ein Zündsignal (CRASH, AIR, GURT) erzeugt worden ist.

8. Verfahren nach Anspruch 7, **dadurch gekennzeichnet, dass** sich das erste Merkmalssignal (x[n₁]) auf einen ersten Zeitpunkt (n₁) und sich das zweite Merkmalssignal (y[n₂]) auf einen zweiten Zeitpunkt (n₂) bezieht, wobei der erste Zeitpunkt (n₁) vor dem zweiten Zeitpunkt (n₂) liegt.

9. Verfahren nach Anspruch 7 oder 8, **dadurch gekennzeichnet, dass** mittels des zweiten Klassifikators (52) eine zweite Unsicherheits-Mitteilung (UM52), dass keine Entscheidung getroffen wird, ob das Zündsignal (CRASH, AIR, GURT) erfolgen soll, ausgegeben wird.

10. Verfahren nach Anspruch 9, **dadurch gekennzeichnet, dass** das Zündsignal (CRASH, AIR, GURT) mittels eines dritten Klassifikators (53) in Abhängigkeit eines in Abhängigkeit der mittels des Kollisionssensors (S1) oder eines weiteren Kollisions-sensors (S2) oder eines dritten Kollisionssensors (S3) gemessenen Größe (aS1, aS2, aS3) gebildeten dritten Merkmalssignals (z[n₃]) erzeugt wird, wenn eine zweite Unsicherheits-Mitteilung (UM52) erfolgt ist und mittels des dritten Klassifikators (53) eine Kollision oder eine drohende Kollision erkannt wird.

11. Verfahren nach Anspruch 10, **dadurch gekennzeichnet, dass.** sich das dritte Merkmalssignal (z[n₃]) auf einen dritten Zeitpunkt (n₃) bezieht, wobei der zweite Zeitpunkt (n₂) vor dem dritten Zeitpunkt (n₃) liegt.

## Claims

1. Collision and person-protection system for a vehicle (1), more particularly occupant-protection system or pedestrian-protection system for a vehicle, with at least one collision sensor (S1) for measuring a parameter (aS1) of the vehicle (1) suitable for collision detection, wherein the collision or person-protection system comprises a person protection actuator (15, 16) triggerable by means of an ignition signal (CRASH, AIR, BELT) or a warning device triggerable by means the ignition signal (CRASH, AIR, BELT), wherein the collision or person-protection system has a first classifier (51) for generating the ignition signal (CRASH, AIR, BELT) dependent on a first feature signal (x[n₁]) - formed depending on the parameter (aS1) measured by means of the collision sensor (S1), or if by way of the first classifier (51) neither a collision nor a potential collision is detected with adequate certainty, nor can be ruled out with adequate certainty, an uncertainty message (UM51) that no decision is being made as to whether the ignition signal (CRASH, AIR, BELT) should be given, and wherein the collision and person-protection system comprises a second classifier (52) for generating the ignition signal (CRASH, AIR, BELT) dependent on a second feature signal (y[n₂] formed in dependence on the parameter (aS1, aS2) measured by means of the collision sensor (S1) or a further collision sensor (S2), in the event of emission of an uncertainty message (UM51)

2. Collision or person-protection system according to claim 1 **characterised in that** the parameter (aS1) measured by means of the collision sensor (S1) is a movement parameter, more particularly an acceleration.

3. Collision or person-protection system according to claim 1 or 2 **characterised in that** the parameter (aS2) measured by the further collision sensor (S2) is a movement parameter, more particularly an acceleration.

4. Collision or person-protection system according to claim 1, 2 or 3 **characterised in that** by means of the second classifier (52) if by way of the second classifier (52) neither a collision nor a potential collision is detected with adequate certainty, nor can be ruled out with adequate certainty, a second uncertainty message (UM52) that no decision is being made as to whether the ignition signal (CRASH, AIR, BELT) should be given, can be emitted.

5. Collision and person-protection system according to claim 4 **characterised in that** it comprises a third classifier (53) for generating the ignition signal (CRASH, AIR, BELT) dependent on a third feature signal (z[n₃] formed in dependence on the parameter (aS1, aS2, aS3) measured by means of the collision sensor (S1) or the second collision sensor (S2) or the further collision sensor (S3), in the event of emission of a second uncertainty message (UM52).

6. Collision and person-protection system according to claim 5 **characterised in that** the parameter (aS3) measured by way of the third collision sensor (S3) is a movement parameter, more particularly an acceleration.

7. Method of operating a collision and or person-protection system for a motor vehicle (1), more particularly a collision or person-protection system according to any one of the preceding claims,
wherein
- by means of a collision sensor (S1) a parameter (aS1) of the motor vehicle (1) suitable for detecting a collision is measured
- by means of a first classifier (51) an ignition signal (CRASH, AIR, BELT) or, if by way of the first classifier (51) neither a collision nor a potential collision is detected with adequate certainty, nor can be ruled out with adequate certainty, an uncertainty message (UM51) that no decision is being made as whether the ignition signal (CRASH, AIR, BELT) should be given, is generated depending on a first feature signal (x[n₁]) formed in dependence on the parameter (aS1) measured by means of the collision sensor (S1),
- the ignition signal (CRASH, AIR, BELT) is generated by means of a second classifier (52) depending on a second feature signal (y[n₂]) formed in dependence on the parameter (aS1, aS2) measured by means of the collision sensor (S1) or a further collision sensor (S2), if an uncertainty message (UM51) is given and by means of the second classifier (52) a collision or a potential collision is detected and
- a person-protection actuator (15, 16) and/or a warning device is triggered if an ignition signal (CRASH, AIR, BELT) has been generated.

8. Method according to claim 7 **characterised in that** the first feature signal (x[n₂]) relates to a first point in time (n₁) and the second feature signal (y[n₂]) relates to a second point in time (n₂) wherein the first point in time (n₁) is prior to the second point in time (n₂).

9. Method according to claim 7 or 8 **characterised in that** a second uncertainty message (UM52) that no decision is being made as to whether the ignition signal (CRASH, AIR, BELT) is to be given, is issued by the second classifier (52).

10. Method according to claim 9 **characterised in that** the ignition signal (CRASH, AIR, BELT) is generated by means of a third classifier (53) depending on a third feature signal (z[n₃]) formed in dependence on a parameter (aS1, aS2, aS2) measured by the collision sensor (S1) or a further collision sensor (S2) or a third collision sensor (S3) if a second uncertainly message (UM52) is given and a collision or potential collision is detected by means of the third classifier (53).

11. Method according to claim 10 **characterised in that** the third feature signal (z[n₃]) relates to a third point in time (n₃) wherein the second point in time (n₂) is prior to the third point in time (n₃).

## Revendications

1. Système anticollision ou de protection des personnes pour un véhicule automobile (1), notamment système de protection des occupants ou système de protection des piétons pour un véhicule automobile, avec au moins un capteur de collision (S1) pour mesurer une grandeur (aS1), convenant à la détection de collision, du véhicule automobile (1), le système anticollision ou de protection des personnes comprenant un actionneur de protection des personnes (15, 16) déclenchable au moyen d'un signal d'allumage (CRASH, AIR, GURT) ou un dispositif d'avertissement déclenchable au moyen du signal d'allumage (CRASH, AIR, GURT), le système anticollision ou de protection des personnes comportant un premier classificateur (51) pour produire le signal d'allumage (CRASH, AIR, GURT) en fonction d'un premier signal de caractéristiques (x[n₁]) - formé en fonction de la grandeur (aS1) mesurée au moyen du capteur de collision (S1) - ou, lorsqu'on ne peut au moyen du premier classificateur (51) ni détecter avec suffisamment de certitude une collision ou une menace de collision ni exclure celles-ci également avec suffisamment de certitude, un message d'incertitude (UM51) indiquant qu'aucune décision n'a été prise quant à la production ou non du signal d'allumage (CRASH, AIR, GURT) et le système anticollision ou de protection des personnes comprenant un deuxième classificateur (52) pour produire le signal d'allumage (CRASH, AIR, GURT) en fonction d'un deuxième signal de caractéristiques (y[n₂]) - formé en fonction de la grandeur (aS1, aS2) mesurée au moyen du capteur de collision (S1) ou d'un autre capteur de collision (S2) - lorsqu'un message d'incertitude (UM51) a été produit.

2. Système anticollision ou de protection des personnes selon la revendication 1, **caractérisé en ce que** la grandeur (aS1) mesurée au moyen du capteur de collision (S1) est une grandeur de mouvement, notamment une accélération.

3. Système anticollision ou de protection des personnes selon la revendication 1 ou 2, **caractérisé en ce que** la grandeur (aS2) mesurée au moyen de l'autre capteur de collision (S2) est une grandeur de mouvement, notamment une accélération.

4. Système anticollision ou de protection des personnes selon la revendication 1, 2 ou 3, **caractérisé en ce que**, lorsqu'on ne peut au moyen du deuxième classificateur (52) ni détecter avec suffisamment de certitude une collision ou une menace de collision ni exclure celles-ci également avec suffisamment de certitude, on peut fournir au moyen du deuxième classificateur (52) un deuxième message d'incertitude (UM52) indiquant qu'aucune décision n'a été prise quant à la production ou non du signal d'allumage (CRASH, AIR, GURT).

5. Système anticollision ou de protection des personnes selon la revendication 4, **caractérisé en ce qu'**il comprend un troisième classificateur (53) pour produire le signal d'allumage (CRASH, AIR, GURT) en fonction d'un troisième signal de caractéristiques (z[n₃]) - formé en fonction de la grandeur (aS1, aS2, aS3) mesurée au moyen du capteur de collision (S1) ou de l'autre capteur de collision (S2) ou d'un troisième capteur de collision (S3) - lorsqu'un deuxième message d'incertitude (UM52) a été produit.

6. Système anticollision ou de protection des personnes selon la revendication 5, **caractérisé en ce que** la grandeur (aS3) mesurée au moyen du troisième capteur de collision (S3) est une grandeur de mouvement, notamment une accélération.

7. Procédé de fonctionnement d'un système anticollision ou de protection des personnes pour un véhicule automobile (1), notamment d'un système anticollision ou de protection des personnes selon l'une des revendications précédentes,
selon lequel
- on mesure au moyen d'un capteur de collision (S1) une grandeur (aS1), convenant à la détection de collision, du véhicule automobile (1),
- on produit au moyen d'un premier classificateur (51) en fonction d'un premier signal de caractéristiques (x[n₁]) - formé en fonction de la grandeur (aS1) mesurée au moyen du capteur de collision (S1) - un signal d'allumage (CRASH, AIR, GURT) ou, lorsqu'on ne peut au moyen du premier classificateur (51) ni détecter avec suffisamment de certitude une collision ou une menace de collision ni exclure celles-ci également avec suffisamment de certitude, un message d'incertitude (UM51) indiquant qu'aucune décision n'a été prise quant à la production ou non du signal d'allumage (CRASH, AIR, GURT),
- on produit le signal d'allumage (CRASH, AIR, GURT) au moyen d'un deuxième classificateur (52) en fonction d'un deuxième signal de caractéristiques (y [n₂]) - formé en fonction de la grandeur (aS1, aS2) mesurée au moyen du capteur de collision (S₁) ou d'un autre capteur de collision (S2) - lorsqu'un message d'incertitude (UM51) a été produit et qu'une collision ou une menace de collision a été détectée au moyen du deuxième classificateur (52), et
- on déclenche un actionneur de protection des personnes (15, 16) et/ou un dispositif d'avertissement lorsqu'un signal d'allumage (CRASH, AIR, GURT) a été produit.

8. Procédé selon la revendication 7, **caractérisé en ce que** le premier signal de caractéristiques (x [n₁]) se rapporte à un premier instant (n₁) et le deuxième signal de caractéristiques (y[n₂]) se rapporte à un deuxième instant (n2), le premier instant (n₁) étant antérieur au deuxième instant (n₂).

9. Procédé selon la revendication 7 ou 8, **caractérisé en ce qu'**on fournit au moyen du deuxième classificateur (52) un deuxième message d'incertitude (UM52) indiquant qu'aucune décision n'a été prise quant à la production ou non du signal d'allumage (CRASH, AIR, GURT).

10. Procédé selon la revendication 9, **caractérisé en ce que** l'on produit le signal d'allumage (CRASH, AIR, GURT) au moyen d'un troisième classificateur (53) en fonction d'un troisième signal de caractéristiques (z [n₃]) - formé en fonction de la grandeur (aS1, aS2, aS3) mesurée au moyen du capteur de collision (S1) ou d'un autre capteur de collision (S2) ou d'un troisième capteur de collision (S3) - lorsqu'un deuxième message d'incertitude (UM52) a été produit et qu'une collision ou une menace de collision a été détectée au moyen du troisième classificateur (53).

11. Procédé selon la revendication 10, **caractérisé en ce que** le troisième signal de caractéristiques (z[n₃]) se rapporte à un troisième instant (n₃) le deuxième instant (n₂) étant antérieur au troisième instant (n₃).
